# EUROPEAN PATENT APPLICATION

(11) **EP 4 216 341 A1**
(43) Date of publication of application: **26.07.2023**
(21) Application number: 21951412.2
(22) Date of filing: 30.07.2021
(51) Int. Cl.: H01M 10/655

(54) **BATTERY CELL, BATTERY, APPARATUS, AND BATTERY CELL MANUFACTURING METHOD AND DEVICE**

(71) Applicant: Contemporary Amperex Technology Co., Limited, Fujian PRC 352100 (CN)
(72) Inventor: BU, Xiangyan, Ningde, Fujian 352100 (CN); ZHOU, Wenlin, Ningde, Fujian 352100 (CN); LI, Xing, Ningde, Fujian 352100 (CN); CHEN, Xinxiang, Ningde, Fujian 352100 (CN); WANG, Peng, Ningde, Fujian 352100 (CN); JIN, Haizu, Ningde, Fujian 352100 (CN)
(74) Representative: Rowlands, Stuart Michael
(86) International application number: PCT/CN2021/109919
(87) International publication number: WO 2023/004832

(57) **Abstract**

Embodiments of the present application provide a battery cell, comprising: a casing having an accommodating space; an electrode assembly accommodated in the accommodating space, the electrode assembly comprising electrode pieces; and a heat-conducting component configured to directly connect the electrode plates and the casing to conduct heat from the electrode assembly to the casing. According to the embodiments of the present application, the heat dissipation efficiency of the battery cell can be improved.

## Description

### Technical Field

The present application relates to the field of batteries, and in particular, relates to a battery cell, a battery, an apparatus, and a method and device for manufacturing the battery cell.

### Background Art

In recent years, with the increasing depletion of fossil energy and the increasing pressure of environmental pollution, secondary batteries have received unprecedented attention and development. With the increasing application range, secondary batteries are widely used, for example, in energy storage power systems such as hydraulic power, thermal power, wind power and solar power plants, as well as many fields such as electric tools, electric bicycles, electric motorcycles, electric vehicles, military equipment, and aerospace. Secondary batteries generate heat during use. In the prior art, heat from electrode plates of an electrode assembly is conducted to electrode terminals attached to a housing through tabs, and is discharged to the outside through the electrode terminals. However, it is difficult to quickly dissipate the heat from the electrode plates through the housing.

### Summary of the Invention

In view of the above problem, the present invention provides a battery cell, a battery, an apparatus, and a device and method for manufacturing the battery cell, for improving the dissipation efficiency of internal heat of the battery cell.

According to a first aspect, an embodiment of the present application provides a battery cell, comprising: a casing having an accommodating space; an electrode assembly accommodated in the accommodating space, the electrode assembly comprising electrode plates; and a heat-conducting component configured to be directly connected to the electrode plates and the casing to conduct heat from the electrode assembly to the casing. According to the technical solution of the embodiment of the present application, the heat from the electrode plates of the electrode assembly can be conducted to the casing having a larger area, thereby improving the heat dissipation efficiency of the battery cell.

In some embodiments, the heat-conducting component is connected to the electrode plates and is exposed from an end surface of the electrode assembly. In this way, since the heat-conducting component can be in contact with all of the electrode plates exposed from the end surface of the electrode assembly, heat on the electrode plates can be conducted to the casing more quickly.

In some embodiments, the casing is provided with a first accommodating portion, and the heat-conducting component is configured to extend into the first accommodating portion. This structure can provide an increased contact area between the heat-conducting component and the casing, further improving the heat dissipation efficiency of the battery cell.

In some embodiments, the heat-conducting component comprises a first portion and a second portion connected to each other; and the first portion is in the first accommodating portion, the second portion is between the first portion and the electrode assembly, and the area of the second portion is greater than the area of the first portion. In this way, by increasing the area of the second portion, the heat-conducting area of the heat-conducting component is increased, and the heat from the electrode assembly can be more effectively conducted to the casing.

In some embodiments, the first accommodating portion is a first through hole, the battery cell further comprises a cap, and the cap seals the first through hole. on one hand, this structure can provide an increased contact area between the heat-conducting component and the casing, thereby improving the heat dissipation efficiency; and on the other hand, a sealing face with a higher strength can be formed by sealing the first through hole by the cap, preventing a failure in sealing of the battery cell due to poor sealing between the casing and the heat-conducting component.

In some embodiments, the battery cell further comprises an insulating member, the insulating member being arranged between the casing and the electrode assembly to isolate the electrode assembly from the casing; and the insulating member is provided with a second through hole, one end of the heat-conducting component is configured to be connected to the electrode plates, and the other end thereof is configured to pass through the second through hole to be connected to the casing. In this way, the second through hole can ensure that the heat-conducting component is directly connected to the electrode plates and the casing to conduct the heat from the electrode plates to the casing quickly.

In some embodiments, the battery cell further comprises an insulating member, the insulating member being arranged between the casing and the electrode assembly to isolate the electrode assembly from the casing; and the insulating member is provided with a first recess at an edge, one end of the heat-conducting component is configured to be connected to the electrode plates, and the other end thereof is configured to pass through the first recess to be connected to the casing. In this way, this structure can realize contact between an inner surface of the casing and the heat-conducting component in the first recess, such that the contact area between the heat-conducting component and the casing can be increased, thereby further improving the heat dissipation efficiency of the battery cell.

In some embodiments, a surface of the insulating member close to the electrode assembly is provided with a second recess that communicates with the second through hole, and the heat-conducting component extends into the second recess. In this way, on one hand, the second recess can provide an increased contact area between the heat-conducting component and the casing, thereby further improving the heat dissipation efficiency of the battery cell; and on the other hand, the second recess can reduce space occupation of the heat-conducting component, thereby increasing the energy density of the battery cell.

In some embodiments, a boss is provided at an end of the insulating member, the boss abuts against the electrode assembly, and the second through hole and the first recess or the second recess are provided in the boss; and a bulge that bulges in a direction away from the electrode assembly is provided in a middle portion of the insulating member, a barrier is provided in the bulge, and the barrier extends to an end surface of the electrode assembly opposite to the bulge to avoid contact between the heat-conducting component and a tab of the electrode assembly. In this way, the barrier can prevent direct contact between the heat-conducting component and the tab and avoid tearing of the tab, thereby improving the internal safety of the battery cell.

In some embodiments, the heat-conducting component has a greater heat conductivity coefficient than the insulating member. In this way, the heat dissipation efficiency of the battery cell can be further improved.

In some embodiments, the battery cell comprises a plurality of the electrode assemblies, and the heat-conducting component is connected to electrode plates of the plurality of electrode assemblies. In this way, since the plurality of electrode assemblies share the heat-conducting component, the structure of the battery cell can be simplified.

In some embodiments, the casing is provided with a pressure relief mechanism, and the heat-conducting component and the pressure relief mechanism are spaced apart from each other. In this way, it can prevent the heat-conducting component from blocking a pressure relief passage, and avoid a failure of the pressure relief mechanism.

According to a second aspect, an embodiment of the present application further provides a battery, comprising the battery cell in the first aspect.

In some embodiments, the battery further comprises a thermal management component attached to the casing. In this way, heat conducted from the electrode plates to the casing through the heat-conducting component can be quickly dissipated through the thermal management component, thereby further improving the heat dissipation efficiency of the battery.

In some embodiments, the thermal management component is provided corresponding to the heat-conducting component. In this way, heat conducted from the electrode plates to the casing through the heat-conducting component can be more quickly dissipated through the thermal management component, thereby further improving the heat dissipation efficiency of the battery.

According to a third aspect, an embodiment of the present application further provides an apparatus, comprising the battery in the second aspect, the battery being configured to provide electric energy or serve as an energy storage unit.

According to a fourth aspect, an embodiment of the present application further provides a method for manufacturing a battery cell, comprising: providing a casing, the casing having an accommodating space; providing an electrode assembly, the electrode assembly comprising electrode plates; and providing a heat-conducting component; and accommodating the electrode assembly and the heat-conducting component in the accommodating space, and directly connecting the heat-conducting component to the electrode plates and the casing to conduct heat from the electrode assembly to the casing. According to a fifth aspect, provided is a device for manufacturing a battery cell, comprising: a provision device configured to provide a casing, an electrode assembly, and a heat-conducting component, the casing having an accommodating space, and the electrode assembly comprising electrode plates; and an assembly device configured to accommodate the electrode assembly and the heat-conducting component in the accommodating space, and directly connect the heat-conducting component to the electrode plates and the casing to conduct heat from the electrode assembly to the casing.

### Brief Description of the Drawings

The accompanying drawings described herein are intended to provide a further understanding of the present application, and form a part of the present application. The illustrative embodiments of the present application and the description thereof are intended to explain the present application and do not unduly limit the present application. In the drawings:
FIG. 1 is a schematic diagram of a vehicle according to an embodiment of the present application.
FIG. 2 is a schematic structural diagram of a battery according to an embodiment of the present application.
FIG. 3 is a schematic structural diagram of a battery module according to an embodiment of the present application.
FIG. 4 is an exploded view of a battery cell according to an embodiment of the present application.
FIG. 5A is a cross-sectional view of a structure of an electrode assembly of a battery cell according to an embodiment of the present application.
FIG. 5B is a schematic diagram of the outline of the electrode assembly of the battery cell shown in FIG. 5A.
FIG. 6 is a cross-sectional view of a structure of an electrode assembly of a battery cell according to another embodiment of the present application.
FIG. 7 is a perspective view of an end cap and an insulating member that are assembled according to an embodiment of the present application.
FIG. 8 is a cross-sectional view of heat-conducting component of a battery cell according to an embodiment of the present application.
FIG. 9 is a cross-sectional view of a heat-conducting component of a battery cell according to another embodiment of the present application.
FIG. 10 is a perspective exploded view of a battery cell according to another embodiment of the present application.
FIG. 11 is a cross-sectional view of a heat-conducting component of a battery cell according to another embodiment of the present application.
FIG. 12 is a perspective exploded view of a battery cell according to another embodiment of the present application.
FIG. 13 is a schematic diagram of a method for manufacturing a battery cell according to an embodiment of the present application.
FIG. 14 is a schematic diagram of a device for manufacturing a battery cell according to an embodiment of the present application.

List of reference signs:
100 - battery cell
300 - battery
400 - vehicle
1 - casing
11 - housing
12 - end cap
13 - accommodating space
14 - adapter component
15 - first accommodating portion
16 - cover
17 - first through hole
18 - pressure relief mechanism
19 - thermal management component
110 - electrode plate
111 - first electrode plate
112 - second electrode plate
113 - separator
114 - first side surface
115 - second side surface
116 - end surface
121, 122 - electrode terminal
2 - electrode assembly
21, 22 - tab
3 - heat-conducting component
31- first portion
32 - second portion
4 - insulating member
41 - first recess
42 - second through hole
43 - second recess
44 - boss
45 - bulge

### Detailed Description of Embodiments

In order to make the objectives, technical solutions and advantages of the embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All the other embodiments obtained by those of ordinary skill in the art based on the embodiments of the present application without creative efforts shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the description of the accompanying drawings described above are intended to cover non-exclusive inclusion. The terms "first", "second", etc. in the specification and the claims of the present application as well as the foregoing accompanying drawings are used to distinguish between different objects, rather than describing a specific order or a primary-secondary relationship.

In the present application, "embodiment" mentioned means that the specific features, structures and characteristics described with reference to the embodiments may be included in at least one embodiment of the present application. The phrase at various locations in the specification does not necessarily refer to the same embodiment, or an independent or alternative embodiment exclusive of another embodiment. Those skilled in the art should understand, in explicit and implicit manners, that an embodiment described in the present application may be combined with another embodiment.

In the description of the present application, it should be noted that, the terms "mount", "connected", "connect", or "attach" should be interpreted in a broad sense unless explicitly defined and limited otherwise. For example, the terms may be a fixed connection, a detachable connection, or an integral connection; or may be a direct connection, an indirect connection by means of an intermediate medium, or internal communication between two elements. For those of ordinary skills in the art, the specific meanings of the foregoing terms in the present application may be understood according to specific circumstances. The term "and/or" in the present application is merely a description of the associated relationship of associated objects, representing that three relationships may exist, for example, A and/or B, may be expressed as: the three instances of A alone, A and B simultaneously, and B alone. In addition, the character "/" in the present application generally indicates that the associated objects before and after the character are in a relationship of "or".

"A plurality of" appearing in the present application means two or more (including two).

A battery mentioned in an embodiment of the present application refers to a single physical module including one or more battery cells to provide higher voltage and capacity. For example, the battery may include a battery module, a battery pack, etc. The battery generally includes a case for packaging one or more battery cells. The case may prevent liquid or other foreign matters from affecting charging or discharging of the battery cells.

The battery cell may be cylindrical, flat, rectangular, or in another shape. The battery cell is generally classified into three types according to a packaging approach: a cylindrical battery cell, a square battery cell, and a soft-packed battery cell.

The plurality of battery cells may be connected together in series and/or in parallel via electrode terminals, for use in various application scenarios. In some high-power application scenarios such as an electric vehicle, the application of the battery includes three levels: a battery cell, a battery module, and a battery pack. With the development of technologies, the battery module may be omitted, that is, the battery pack is directly formed by battery cells. With this improvement, weight energy density and volumetric energy density of the battery system are improved, and the number of parts is remarkably reduced.

The inventors have found that heat from an electrode assembly is conducted to the outside through a heat dissipation path of electrode assembly - tab - electrode terminal. However, it is difficult to conduct the heat from the electrode assembly to a casing, resulting in an insufficient heat dissipation effect. There is a solution to provide a heat transfer member between a side surface of the electrode assembly and the casing, but since the heat transfer member is not in direct contact with electrode plates of the electrode assembly, no sufficient heat dissipation effect is expected.

In view of this, the present application provides a technical solution in which a battery cell of the present application includes: a casing having an accommodating space; an electrode assembly accommodated in the accommodating space, the electrode assembly comprising electrode plates; and a heat-conducting component configured to be directly connected to the electrode plates and the casing to conduct heat from the electrode assembly to the casing. According to this technical solution, the heat from the electrode plates of the electrode assembly can be quickly conducted to the casing having a larger area, thereby improving the heat dissipation efficiency of the battery cell.

Some embodiments of the present application provide a battery, comprising a battery cell. Some embodiments of the present application provide an apparatus, comprising a battery, the battery being configured to supply electric energy or serve as an energy storage unit. Optionally, the apparatus may be a vehicle, a ship, a spacecraft, etc.

The technical solutions described in the embodiments of the present application are all applicable to various apparatuses, such as mobile phones, portable devices, laptops, electromobiles, electric toys, electric tools, electric vehicles, ships and spacecraft. For example, the spacecrafts include airplanes, rockets, space shuttles, space vehicles, etc.

It should be understood that the technical solutions described in the embodiments of the present application are not only applicable to the devices described above, but also applicable to all devices using a battery. However, for the sake of brevity of description, the following embodiments will be described taking an electric vehicle as an example.

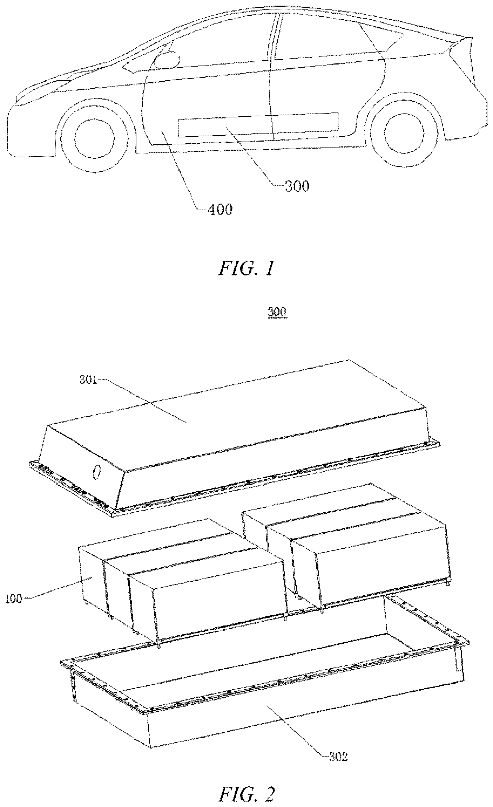

For example, as shown in FIG. 1, which is a schematic structural diagram of a vehicle 400 according to an embodiment of the present application. The vehicle 400 may be a fuel vehicle, a gas vehicle or a new-energy vehicle. The new-energy vehicle may be a battery electric vehicle, a hybrid vehicle, an extended-range vehicle, etc. For example, the battery 300 may be provided at the bottom or the head or the tail of the vehicle 400. The battery 300 may be configured to supply power to the vehicle 400. For example, the battery 300 can serve as a power source for operating the vehicle 400 for use in a circuit system of the vehicle 400, for example, to meet the working power demand of the vehicle 400 during startup, navigation and running. In another embodiment of the present application, the battery 400 can not only serve as a power source for operating the vehicle 300, but also serve as a power source for driving the vehicle 300, instead of or partially instead of fuel or natural gas, to provide driving power for the vehicle 400.

The battery may comprise a plurality of battery cells in order to meet different power demands, wherein the plurality of battery cells may be in series connection, parallel connection or series-parallel connection. The series-parallel connection refers to a combination of series connection and parallel connection. The battery may also be referred to as a battery pack. Optionally, the plurality of battery cells may be connected in series or parallel or series and parallel to form a battery module, and a plurality of battery modules may then be connected in series or parallel or series and parallel to form the battery. That is to say, the plurality of battery cells may directly constitute the battery, or may first constitute the battery modules that may then constitute the battery.

For example, as shown in FIG. 2, which is a schematic structural diagram of a battery 300 according to an embodiment of the present application. The battery 300 may comprise a plurality of battery cells 100. The battery 300 may further comprise a case (or referred as enclosure) with the interior of the case being of a hollow structure, and the plurality of battery cells 100 are accommodated in the case. As shown in FIG. 2, the case may comprise two portions, which are referred to herein as a first portion 301 and a second portion 302. The first portion 301 and the second portion 302 are fastened together. The first portion 301 and the second portion 302 may be shaped depending on the shape of a combination of the plurality of battery cells 100, and each of the first portion 301 and the second portion 302 has an opening. For example, the first portion 301 and the second portion 302 may both be a hollow cuboid and each have only one face that is an open face, the opening of the first portion 301 being provided facing the opening of the second portion 302, and the first portion 301 and the second portion 302 being fastened to each other to form a case having a closed cavity. The plurality of battery cells 100 are in parallel connection or in series connection or in series-parallel connection for combination, and then are placed in the case which is formed of the first portion 301 and the second portion 302 by means of fastening.

Optionally, the battery 300 may further comprise other structures, which will not be described in detail herein. For example, the battery 300 may further comprise a busbar component for achieving an electric connection, such as parallel connection or series connection or series-parallel connection, between the plurality of battery cells 100. Specifically, the busbar component may achieve the electrical connection between the battery cells 100 by connecting electrode terminals of the battery cells 100. Further, the busbar component may be fixed to the electrode terminals of the battery cells 100 by means of welding. The electric energy of the plurality of battery cells 100 may be further led out by means of an electrically conductive mechanism passing through the case. Optionally, the electrically conductive mechanism may also be a busbar component.

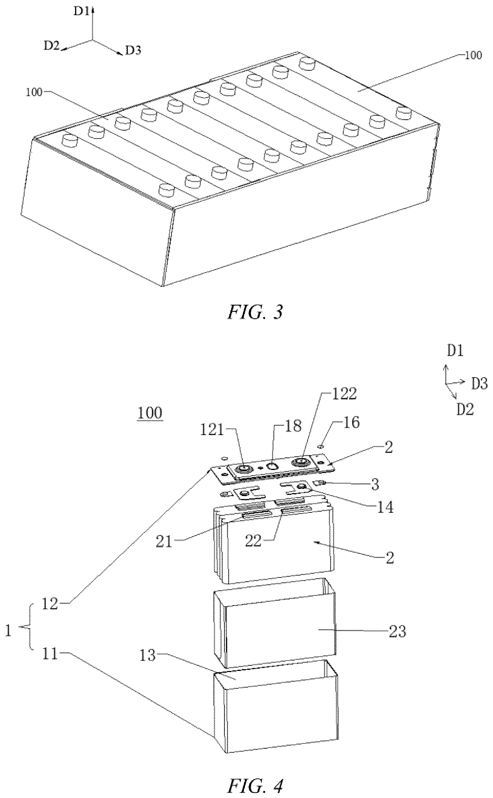

The number of the battery cells 100 may be set as any value according to different power demands. The plurality of battery cells 100 may be in series connection, in parallel connection or in series-parallel connection to achieve higher capacity or power. Since each battery 300 may comprise a large number of battery cells 100. For ease of installation, the battery cells 100 may be provided in groups, and each group of battery cells 100 forms a battery module. The number of the battery cells 100 included in the battery module is not limited and may be set as required. For example, FIG. 3 shows an example of a battery module. The battery may comprise a plurality of battery modules that may be in series connection, in parallel connection or in series-parallel connection.

FIG. 4 shows a battery cell 100 having a square structure as an example. The battery cell in the present application includes a lithium-ion battery, a lithium-sulfur battery, a sodium-lithium-ion battery, a sodium-ion battery, a magnesium-ion battery, or the like.

Referring to FIG. 4, the battery cell 100 according to an embodiment of the present application comprises: a casing 1 having an accommodating space 13; an electrode assembly 2 accommodated in the accommodating space, the electrode assembly 2 having electrode plates; and a heat-conducting component 3 configured to be directly connected to the electrode plates and the casing 1 to conduct heat from the electrode assembly 2 to the casing 1.

In some embodiments, the battery cell 100 comprises a plurality of electrode assemblies 2, and the heat-conducting component 3 is connected to electrode plates of the plurality of electrode assemblies 2. Since the plurality of electrode assemblies 2 share the heat-conducting component 3, the structure of the battery cell 100 can be simplified.

In some embodiments, as shown in FIG. 4, two electrode assemblies 2 are provided in the housing 11, and the two electrode assemblies 2 are stacked along a second direction D2 (a thickness direction of the battery cell). Of course, in other embodiments, one electrode assembly 2 may also be provided in the housing 11, or three or more electrode assemblies 2 may be provided in the housing. The plurality of electrode assemblies 2 are stacked along the second direction D2.

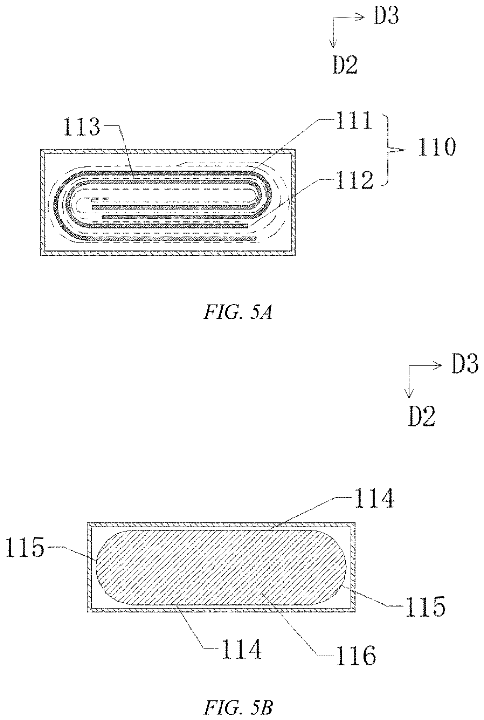

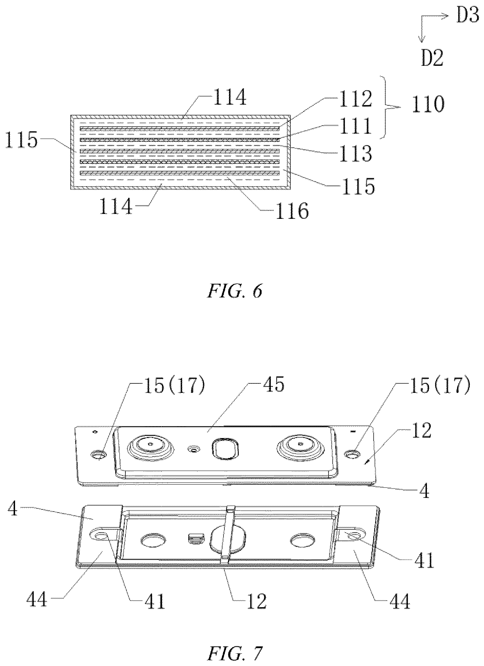

The structure of electrode plates are shown in FIGS. 5A, 5B, and 6. The electrode assembly 2 comprises a first electrode plate 111, a second electrode plate 112, and a separator 113 arranged between the first electrode plate 111 and the second electrode plate 112. The first electrode plate 111 may be a positive electrode plate, and the second electrode plate 112 may be a negative electrode plate. In other embodiments, the first electrode plate 111 may be a negative electrode plate, and the second electrode plate 112 may be a positive electrode plate. The first electrode plate 111 and the second electrode plate 112 may be collectively referred to as electrode plates 110. The separator 113 is an insulator between the first electrode plate 111 and the second electrode plate 112. A coated area of the positive electrode plate may coated with an active material of the positive electrode plate, and a coated area of the negative electrode plate may be coated with an active material of the negative electrode plate. A portion extending from the coated area of the positive electrode plate 111 acts as a positive electrode tab 21; and a portion extending from the coated area of the negative electrode plate 112 acts as a negative electrode tab 22. In some embodiments, as shown in FIG. 5A, the electrode assembly 2 is of a wound structure. The first electrode plate 111, the separator 113, and the second electrode plate 112 are all strip structures. The first electrode plate 111, the separator 113, and the second electrode plate 112 are sequentially stacked and wound to form the electrode assembly 2. FIG. 5B is a schematic diagram of the outline of the electrode assembly 2. An outer surface of the electrode assembly 2 includes a pair of first side surfaces 114, and the pair of first side surfaces 114 face each other along the second direction D2. The electrode assembly 2 is of a substantially hexahedral structure, and the first side surfaces 114 are substantially parallel to a winding axis and are outer surfaces with the largest area. The first side surfaces 114 may be relatively flat surfaces and are not required to be planar. The outer surface of the electrode assembly 2 further includes a pair of second side surfaces 115, and the pair of second side surfaces 115 face each other along a third direction D3. The pair of first side surfaces 114 and the pair of second side surfaces 115 are connected by an end surface 116.

In some embodiments, as shown in FIG. 6, the electrode assembly 2 is of a laminated structure, that is, the electrode assembly 2 includes a plurality of first electrode plates 111 and a plurality of second electrode plates 112, and a separator 113 is provided between one first electrode plate 111 and one second electrode plate 112. The first electrode plate 111, the separator 113, and the second electrode plate 112 are sequentially stacked. The first electrode plate 111, the separator 113, and the second electrode plate 112 are stacked along the second direction D2. Similar to the electrode assembly shown in FIG. 4B, the electrode assembly 2 is of a substantially hexahedral structure, and the outer surface of the electrode assembly 2 includes a pair of first side surfaces 114 and a pair of second side surfaces 115. The first side surfaces 114 are substantially perpendicular to a stacking direction, i.e., the second direction D2. The pair of first side surfaces 115 face each other along a third direction D3. The pair of first side surfaces 114 and the pair of second side surfaces 115 are connected by an end surface 116.

In some embodiments, the heat-conducting component 3 is connected to the electrode plates 110 (including the first electrode plate 111 and the second electrode plate 112) and is exposed from the end surface 116 of the electrode assembly. In this way, since the heat-conducting component 3 can be in contact with all of the electrode plates exposed from the end surface 116 of the electrode assembly 2, heat on the electrode plates 110 (including the first electrode plate 111 and the second electrode plate 112) can be conducted to the casing 2 more quickly.

Turning back to FIG. 4, the casing 1 is composed of a housing 11 and an end cap 12. The housing 11 may be made of a metal material such as aluminum, aluminum alloy or nickel-plated steel. The housing 11 may have a hexahedral shape or other shapes and have an opening. The shape of the housing 11 is not particularly limited in the present application, and may be cylindrical, square or of any other shape. The electrode assembly 2 is accommodated in the housing 11. The end cap 12 is configured for closing the opening of the housing 11 to close the electrode assembly 2 and an electrolyte accommodated in the housing 11. The end cap 12 may be made of metal or rigid plastic. The size of the end cap 12 is adapted to the size of the opening of the housing 11. Two electrode terminals are attached to the end cap 12, and the two electrode terminals are respectively a first electrode terminal 121 and a second electrode terminal 122. Many functional components such as a pressure relief mechanism 18 or a filling port may also be attached to the end cap 12. In addition, the periphery of the electrode assembly 2 may be covered with an insulating sheet 23 to prevent the housing 11 from being charged.

The first electrode terminal 121 may be a positive electrode terminal, and the second electrode terminal 122 may be a negative electrode terminal. In other embodiments, alternatively, the first electrode terminal 121 may be a negative electrode terminal, and the second electrode terminal 122 may be a positive electrode terminal. The first electrode terminal 121 and the second electrode terminal 122 may be fixed to the end cap 12 by welding or by fasteners such as rivets. An insulating treatment may be performed between the first electrode terminal 121, as well as the second electrode terminal 122, and the end cap 12 to prevent the end cap 12 from being charged.

An adapter component 14 may be provided between the end cap 12 and the electrode assembly 2. In this embodiment, there are two adapter components. A first tab 21 of the electrode assembly 2 is electrically connected to the first electrode terminal 121 on the end cap 12 by means of one adapter component 14. The first tab 22 of the electrode assembly 2 is electrically connected to the second electrode terminal 122 on the end cap 12 by means of the other adapter component 14.

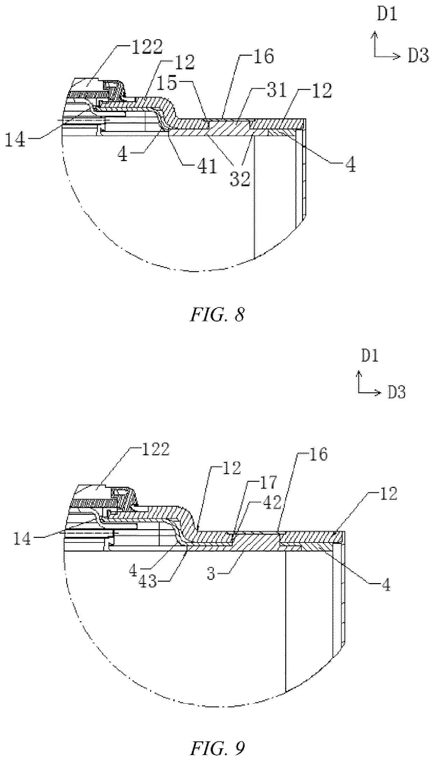

As shown in FIGS. 7 and 8, in some embodiments, the heat-conducting component 3 is provided between the electrode assembly 2 and the casing 1. More specifically, two ends of the end cap 12 are respectively provided with the heat-conducting component 3 in the third direction D3 (a width direction of the battery cell, which is perpendicular to the second direction D2). One end of the heat-conducing component 3 in the first direction D1 (a height direction of the battery cell, which is perpendicular to the second direction D2 and the third direction D3) is in contact with the end surface 116 of the electrode assembly 2, and the other end of the heat-conducting component 3 in the first direction D1 is in contact with the end cap 12. Thereby, the heat-conducting component 3 conducts the heat from the electrode plates to the casing at a position away from the tabs (i.e., a position where the heat from the electrode plates is likely to accumulate), thereby improving the heat dissipation efficiency of the battery cell.

As shown in FIGS. 7 and 8, in some embodiments, the casing 1 is provided with a first accommodating portion 15, and the heat-conducting component 3 is configured to extend into the first accommodating portion 15. This structure can provide an increased contact area between the heat-conducting component 3 that extends in the first accommodating portion 15 and the casing 1, such that a better heat transfer effect can be obtained.

In some embodiments, the first accommodating portion 15 may be cylindrical, prismatic, conical, pyramidal, or the like.

As shown in FIG. 8, in some embodiments, the heat-conducting component 3 comprises a first portion 31 and a second portion 32 that are connected to each other. The first portion 31 is in the first accommodating portion 15, the second portion 32 is between the first portion 31 and the electrode assembly 2, and the area of the second portion 32 is greater than that of the first portion 31. For example, in the first direction D1, the area of a projection of the second portion 32 is greater than the area of a projection of the first portion 31, and the projection of the first portion 31 is included in the projection of the second portion 32. Thereby, by increasing the area of the second portion 32, the heat conduction area of the heat-conducting component is increased, and the heat from the electrode assembly 2 can be more effectively conducted to the casing 1.

In some embodiments, the first accommodating portion 15 is a first through hole 17, the battery cell further comprises a cap 16, and the cap 16 seals the first through hole 17. On one hand, this structure can provide an increased contact area between the heat-conducting component 3 and the casing 1, thereby improving the heat dissipation efficiency; and on the other hand, a sealing face with a higher strength can be formed by sealing the first through hole 17 by the cap 16, preventing a failure in sealing of the battery cell due to poor sealing between the casing and the heat-conducting component.

In some embodiments, the cap 16 may be fixed onto the first through hole 17 of the casing 1 by laser welding, brazing, or the like.

In some embodiments, as shown in FIGS. 7 and 8, the battery cell 100 further comprises an insulating member 4, and the insulating member 4 is provided between the casing 1 and the electrode assembly 2 to isolate the electrode assembly 2 from the casing 1. The insulating member 4 is provided with a first recess 41, and the heat-conducting component 3 passes through the first recess 41 to be connected to the electrode plates 110 and the casing 1. Thereby, this structure can realize contact between an inner surface of the casing 1 and the heat-conducting component 3 in the first recess, such that the contact area between the heat-conducting component 3 and the casing 1 can be increased, thereby further improving the heat dissipation efficiency of the battery cell.

In some embodiments, the insulating member 5 may be made of PP or PET material. The heat-conducting component 3 may fill the first recess 41, for example, by injection. The first recess 41 may be formed, for example, into a column having a cross-sectional shape that is constant in a direction perpendicular to the first direction D 1. In this case, in the first direction D1, the area of a projection of the first recess 41 is greater than the area of a projection of the first through hole 17, and the projection of the first through hole 17 is included in the projection of the first recess 41. Therefore, the heat-conducting component 3 can not only be in contact with the end cap 12 on a side of the first through hole 17, but also be in contact with the end cap 12 on an inner surface of the end cap 12, such that the contact area between the heat-conducting component 3 and the casing 1 can be increased, thereby further improving the heat dissipation efficiency of the battery cell.

In some embodiments, as shown in FIG. 9, the insulating member 4 is provided with a second through hole 42, one end of the heat-conducting component 3 is configured to be connected to the electrode plates 110 of the electrode assembly 2, and the other end is configured to pass through the second through hole 42 to be connected to the casing 1. Thereby, the second through hole 42 can ensure that the heat-conducting component is directly connected to the electrode plates and the casing 1 to quickly conduct the heat from the electrode plates to the casing 1.

In some embodiments, the size, position, and shape of the second through hole 42 match with those of the first through hole 17, for example. For example, the heat-conducting component may extend in the first through hole 17 and the second through hole 42. In addition, the second through hole 42 may be sized to be slightly greater than the first through hole 17.

In some embodiments, as shown in FIG. 9, a surface of the insulating member 4 close to the electrode assembly 2 is provided with a second recess 43 that communicates with the second through hole 42, and the heat-conducting component 3 extends into the second recess 43. Thereby, on one hand, the second recess 43 can provide an increased contact area between the heat-conducting component 3 and the casing 1, thereby further improving the heat dissipation efficiency of the battery cell; and on the other hand, the second recess can reduce space occupation of the heat-conducting component 3, thereby increasing the energy density of the battery cell.

In some embodiments, the second recess 43 may have a cross-sectional area (a cross-section perpendicular to the first direction D1) greater than that of the second through hole 42. The recess 43 may be circular, rectangular, or racetrack-shaped, for example. The recess 43 extends toward the center, for example, along the third direction D3. With the recess 43 extending toward the center, the heat-conducting component 3 in the recess 43 is arranged closer to the first tab 21, the second tab 22 and the adapter component 14. The first tab 21, the second tab 22, and the adapter component 14 heat significantly, which is conductive to quickly conducting the heat to the casing 1 through the heat-conducting component 3. In addition, since the cross-sectional area of the second recess 43 is relatively large, the area of a portion of the heat-conducting component 3 close to the electrode assembly 2 can be increased, thereby improving the heat dissipation efficiency of the battery cell 100.

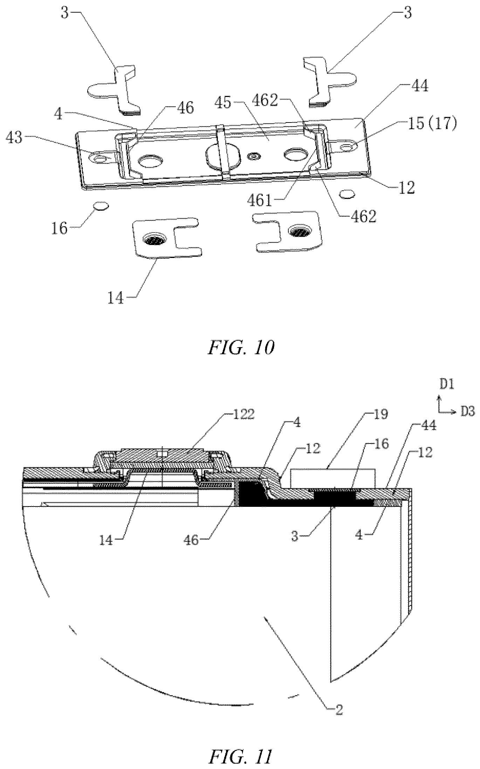

In some embodiments, as shown in FIGS. 10 and 11, a boss 44 is provided at an end of the insulating member 4, the boss 44 abuts against the electrode assembly 2, and the first recess 41 is provided on the boss 44. The second through hole 42 and the first recess 41 or the second recess 43 are provided on the boss 44. A bulge 45 that bulges in a direction away from the electrode assembly 2 is provided in a middle portion of the insulating member 4, a barrier 46 is provided in the bulge 45, and the barrier 46 extends to an end surface of the electrode assembly 2 opposite to the bulge 45 to avoid contact between the heat-conducting component 3 and the tab (the first tab 21 or the second tab 22) of the electrode assembly 2. Thereby, the barrier 46 can prevent direct contact between the heat-conducting component 3 and the tab and avoid tearing of the tab (the first tab 21 or the second tab 22), thereby improving the internal safety of the battery cell.

In some embodiments, the boss 44 is provided at an end of the insulating member 4 in the third direction D3, and the boss 44 protrudes from the end cap 12 toward the electrode assembly 2. For example, the boss 44 may be configured to surround the first recess 41 or the second recess 43 from three sides, and the boss 44 abuts against the end surface 116 of the electrode assembly 2. Thereby, on one hand, the boss 44 plays a role in securing the electrode assembly 2, and on the other hand, by means of the boss 44, the heat-conducting component 3 formed therein is closely connected to the end surface 116 of the electrode assembly 2, thereby further improving the heat dissipation efficiency of the battery cell 100.

In some embodiments, as shown in FIGS. 10 and 11, the heat-conducting component 3 may extend into the bulge 45 to further increase the heat conducting area. In addition, inside the bulge 45, the first tab 21 and the second tab 22 of the electrode assembly 2 are respectively electrically connected to a first electrode terminal 121 and a second terminal electrode 122 on the end cap 12 by means of the adapter components 14. The bulge 45 is provided with through holes at positions corresponding to the first electrode terminal 121 and the second terminal electrode 122. In addition, the bulge 45 is provided with a pressure relief mechanism. That is to say, in the first direction D1, the tabs 21, 22 may be accommodated in the bulge 45. The barrier 46 has, for example, an extension 461 that extends along the second direction D2 and inclined portions 462 that are connected to the extension 461 and two ends of the insulating member in the second direction D2. The extension 461 and the inclined portions 462 may be formed along the outline of the adapter component 14. The provision of the barrier 46 enables reliable separation of the heat-conducting component 3 from current flow components such as the first tab 21, the second tab 22 and the adapter component 14. Thereby, on one hand, the contact area between the heat-conducting component 3 and the electrode plates (including the first electrode plate 111 and the second electrode plate 112) can be increased, and on the other hand, the direct contact between the heat-conducting component 3 and the current flow components such as the adapter component 14 can be avoided, such that the internal safety of the battery cell 100 is ensured.

In some embodiments, the heat-conducting component 3 and the pressure relief mechanism 18 are spaced apart from each other, and this structure can prevent the heat-conducting component 3 from blocking a pressure relief passage and prevent a failure of the pressure relief mechanism 18.

In some embodiments, the heat-conducting component 3 and the pressure relief mechanism 18 are spaced apart from each other by the barrier 46. When the heat-conducting component is formed by means of injection, the barrier 46 can prevent the injected heat-conducting component 3 from flowing into a pressure relief port in the insulating member 4 that corresponds to the pressure relief mechanism 18, thereby preventing the heat-conducting component 3 from blocking the pressure relief passage and preventing the failure of the pressure relief mechanism 18. In addition, the heat-conducting component 3 and the pressure relief mechanism 18 may also be spaced apart from each other by means of the tabs 21, 22, the adapter component 14, etc., which can also prevent the failure of the pressure relief mechanism 18.

In some embodiments, the heat-conducting component 3 has a greater heat conductivity coefficient than the insulating member 4. Thereby, the heat dissipation efficiency of the battery cell can be further improved.

In some embodiments, the heat conductivity coefficient of the heat-conducting component 3 is, for example, greater than the heat conductivity coefficient of air, for example, being equal to or greater than 0.8 w/kg.°C. For example, the heat-conducting component 3 may be made of a material such as thermally conductive silicone grease, thermal conductive silicone, or thermally conductive potting adhesive.

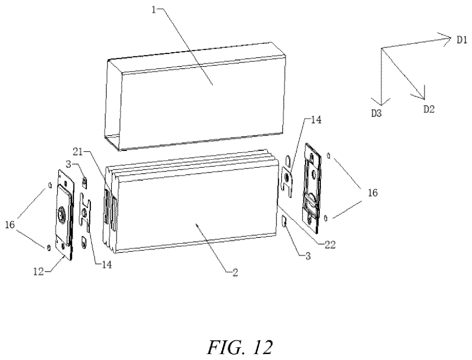

In addition, various modifications may also be made to the technical solution of the present application. For example, as shown in FIG. 12, the first tab 21 and the second tab 22 may be respectively arranged at two ends of the electrode assembly 2 along the first direction D1. Correspondingly, two ends of the electrode assembly 2 are respectively provided with the heat-conducting component 3 along the first direction D1. In this way, the heat-conducting component 3 can conduct heat to the casing 1 at two end surfaces of the electrode assembly 2, thereby further improving the heat dissipation efficiency of the battery cell.

In addition, the present application further provides a battery, the battery comprising a battery cell of the present application.

In some embodiments, the battery may further comprise a busbar component for achieving an electric connection, such as parallel connection or series connection or series-parallel connection, between a plurality of battery cells 100.

In some embodiments, as shown in FIG. 11, the battery further comprises a thermal management component 19, the thermal management component being attached to the casing 2. In this way, heat conducted from the electrode plates 111, 112 to the casing 1 through the heat-conducting component 3 can be quickly dissipated through the thermal management component 19, thereby further improving the heat dissipation efficiency of the battery.

In some embodiments, the thermal management component 19 is configured to accommodate a fluid to adjust the temperature of the plurality of battery cells 100. The fluid here may be liquid or gas, and adjusting the temperature refers to heating or cooling the plurality of battery cells 100. In the case of cooling down or lowering the temperatures of the battery cells 100, the thermal management component 19 is configured to accommodate a cooling fluid to lower the temperatures of the plurality of battery cells 100. In this case, the thermal management component 19 may also be called as a cooling component, a cooling system, a cooling plate, or the like, and the fluid accommodated therein may also be called as a cooling medium or cooling fluid, and more specifically, may be called as a cooling liquid or cooling gas. In addition, the thermal management component 19 may further be configured to heat and rise the temperature of the plurality of battery cells 100, which is not limited in the embodiments of this application. Optionally, the fluid may circulate to achieve a better effect of temperature adjustment. Optionally, the fluid may be water, a mixture of water and ethylene glycol, air, or the like.

In some embodiments, as shown in FIG. 11, the thermal management component 19 is provided corresponding to the heat-conducting component 3. In this way, heat conducted from the electrode plates 111, 112 to the casing 1 through the heat-conducting component 3 can be quickly dissipated through the thermal management component, thereby further improving the heat dissipation efficiency of the battery.

In addition, an embodiment of the present application further provides an apparatus 400, the apparatus 400 may comprise the battery cell 100 according to the foregoing embodiments. Optionally, the apparatus may be a vehicle, a ship, a spacecraft, etc.

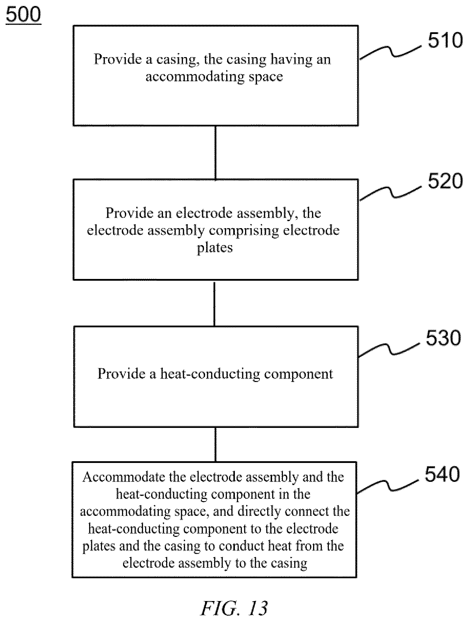

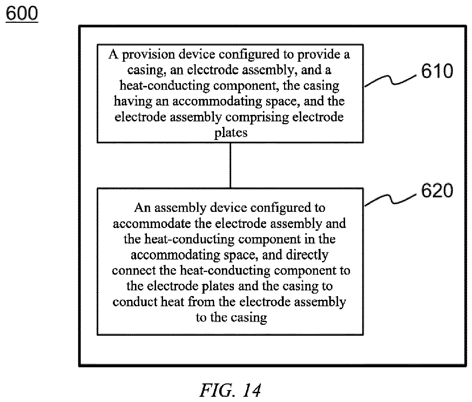

A method and device for manufacturing a battery cell according to the embodiments of the present application will now be described below with reference to FIGS. 13 and 14. For parts not described in detail, reference may be made to the foregoing embodiments.

FIG. 13 is a schematic block diagram of a method 500 for manufacturing a battery cell according to an embodiment of the present application. The method 500 for manufacturing a battery cell according to the embodiment of the present application comprises: providing 510 a casing, the casing having an accommodating space; providing 520 an electrode assembly, the electrode assembly comprising electrode plates; providing 530 a heat-conducting component; and and an assembly step 540, during which the electrode assembly and the heat-conducting component are accommodated in the accommodating space, and the heat-conducting component is directly connected to the electrode plates and the casing to conduct heat from the electrode assembly to the casing. Here, the sequence of steps 510 to 530 is not limited, and can be interchanged arbitrarily. For example, step 520 of providing an electrode assembly can be performed before the step 510 of providing a casing.

FIG. 14 is a schematic flowchart of a device 600 for manufacturing a battery cell according to an embodiment of the present application. The device 600 for manufacturing a battery cell according to the embodiment of the present application comprises: a provision device 610 configured to provide a casing, an electrode assembly, and a heat-conducting component, the casing having an accommodating space, and the electrode assembly comprising electrode plates; and an assembly device 620 configured to accommodate the electrode assembly and the heat-conducting component in the accommodating space, and directly connect the heat-conducting component to the electrode plates and the casing to conduct heat from the electrode assembly to the casing.

Finally, it should be noted that the present application is not limited to the above embodiments. The above embodiments are merely exemplary, and any embodiment that has substantially same constitutions as the technical ideas and has the same effects within the scope of the technical solution of the present application falls within the technical scope of the present application. Furthermore, without departing from the spirit of the present application, various modifications that can be conceived by those skilled in the art to the embodiments, and other modes constructed by combining some of the constituent elements of the embodiments also fall within the scope of the present application.

## Claims

1. A battery cell, comprising:
a casing having an accommodating space;
an electrode assembly accommodated in the accommodating space , the electrode assemblycomprising electrode plates; and
a heat-conducting component configured to be directly connected to the electrode plates and the casingto conduct heat from the electrode assemblyto the casing.

2. The battery cell according to claim 1, wherein
the heat-conducting component is connected to the electrode plates and is exposed from an end surface of the electrode assembly.

3. The battery cell according to claim 1 or 2, wherein
the casingis provided with a first accommodating portion, and the heat-conducting component is configured to extend into the first accommodating portion.

4. The battery cell according to claim 3, wherein
the heat-conducting component comprises a first portion and a second portion connected to each other; and the first portionis in the first accommodating portion, the second portion is between the first portion and the electrode assembly, and the area of the second portion is greater than the area of the first portion.

5. The battery cell according to claim 3 or 4, wherein
the first accommodating portion is a first through hole, the battery cell further comprises a cap, and the cap seals the first through hole.

6. The battery cell according to any one of claims 1-5, wherein
the battery cell further comprises an insulating member, the insulating member being arranged between the casingand the electrode assemblyto isolate the electrode assemblyfrom the casing; and
the insulating member is provided with a second through hole, one end of the heat-conducting component is configured to be connected to the electrode plates, and the other end thereof is configured to pass through the second through hole to be connected to the casing; or the insulating member is provided with a first recess at an edge, one end of the heat-conducting component is configured to be connected to the electrode plates, and the other end thereof is configured to pass through the first recess to be connected to the casing.

7. The battery cell according to claim 6, wherein
a surface of the insulating member close to the electrode assemblyis provided with a second recess that communicates with the second through hole, and the heat-conducting component extends into the second recess.

8. The battery cell according to claim 6 or 7, wherein a boss is provided at an end of the insulating member, the boss abuts against the electrode assembly, and the second through hole and the recess are provided in the boss; and
a bulge that bulges in a direction away from the electrode assemblyis provided in a middle portion of the insulating member, a barrier is provided in the bulge, and the barrier extends to an end surface of the electrode assembly opposite to the bulge to avoid contact between the heat-conducting component and tabs of the electrode assembly.

9. The battery cell according to any one of claims 6-8, wherein
the heat-conducting component has a greater heat conductivity coefficient than the insulating member.

10. The battery cell according to any one of claims 1-9, wherein
the battery cell comprises a plurality of the electrode assemblies, and the heat-conducting component is connected to electrode plates of the plurality of electrode assemblies.

11. The battery cell according to any one of claims 1-10, wherein
the casingis provided with a pressure relief mechanism, and the heat-conducting component and the pressure relief mechanism are spaced apart from each other.

12. A battery, comprising the battery cell according to any one of claims 1 to 11.

13. The battery according to claim 12, wherein the battery further comprises a thermal management component attached to the casing.

14. The battery according to claim 13, wherein the thermal management component is provided corresponding to the heat-conducting component.

15. An apparatus, comprising the battery cell according to any one of claims 1-14, wherein the battery cell is configured to provide electric energy or serve as an energy storage unit.

16. A method for manufacturing a battery cell, comprising:
providing a casing, the casinghaving an accommodating space;
providing an electrode assembly, the electrode assemblycomprising electrode plates; and
providing a heat-conducting component; and
accommodating the electrode assembly and the heat-conducting component in the accommodating space, and directly connecting the heat-conducting component to the electrode plates and the casing to conduct heat from the electrode assembly to the casing.

17. A device for manufacturing a battery cell, comprising:
a provision device configured to provide a casing, an electrode assembly, and a heat-conducting component, the casing having an accommodating space, and the electrode assembly comprising electrode plates; and
an assembly device configured to accommodate the electrode assembly and the heat-conducting component in the accommodating space, and directly connect the heat-conducting component to the electrode plates and the casing to conduct heat from the electrode assembly to the casing.
